# EUROPÄISCHE PATENTSCHRIFT

(11) **EP 0 464 347 B1**
(45) Veröffentlichungstag und Bekanntmachung des Hinweises auf die Patenterteilung: **01.05.1996**
(21) Anmeldenummer: 91108035.6
(22) Anmeldetag: 17.05.1991
(51) Int. Cl.: F16D 66/02

(54) **Verfahren zur Herstellung einer Reibbelagwarneinrichtung**
Method for making a brake lining wear warning apparatus
Procédé de fabrication de dispositif avertisseur d'usure pour garnitures de frein

(30) Priorität: 06.07.1990 DE 4021568; 15.11.1990 DE 4036400
(43) Veröffentlichungstag der Anmeldung: 08.01.1992
(73) Patentinhaber: ITT Automotive Europe GmbH, D-60488 Frankfurt (DE)
(72) Erfinder: Weiler, Rolf, W-6239 Eppstein 2 (DE); Mehner, Götz, W-6100 Darmstadt (DE); Roth, Gerald, W-6450 Hanau 1 (DE); Bach, Uwe, W-6272 Niedernhausen (DE)

(56) Entgegenhaltungen:
- DE-A- 2 436 136
- DE-A- 2 535 265
- FR-A- 2 504 226
- US-A- 3 556 258
- US-A- 4 890 697

## Beschreibung

Die Erfindung betrifft ein Verfahren zur Herstellung einer Reibbelagwarneinrichtung.

Aus der FR 2 319 880 ist eine Reibbelagwarneinrichtung für eine Trommelbremse bekannt. Gleichzeitig sind verschiedene Schaltungsmöglichkeiten für eine Reibbelagwarneinrichtung mit mehreren Warnpunkten angegeben. Die Reibbelagwarneinrichtung ist auf einer mit einem Gewindestift versehenen Klemme aufgedruckt oder eingraviert. Bei den thermischen und mechanischen Beanspruchungen, die an einer Bremse auftreten, können solche eingravierten oder gedruckten Schaltungen nachteilig schon frühzeitig ihre Funktionsfähigkeit verlieren.

Aus der DE-PS 32 33 634 ist eine Reibbelagwarneinrichtung mit einem Stützkörper bekannt, der eine umlaufende Nut aufweist. In die Nut ist ein elektrischer Leiter eingelegt. Nachteilig ist diese Reibbelagwarneinrichtung so ausgeführt, daß ein Bremsscheibengrat den elektrischen Leiter vor Abnutzung des Reibbelages zerstört und damit eine frühzeitige Warnung auslöst.

Aus der FR-A-2 504 226 ist eine andere Reibbelagwarneinrichtung bekannt, bei der eine Leiterschleife um einen Stift in einer Spritzgußform gelegt und anschließend mit einer Ummantelung umspritzt wird. Danach wird der Stift wieder entfernt. Dabei entsteht eine Öffnung, in die Feuchtigkeit und Schmutz eindringen kann. Außerdem ist die kreisrunde Form der Schlaufe vorgegeben und kann nicht ohne weiteres durch andere, zweckmäßigere Formen ersetzt werden.

Aus der US-4 890 697 ist schließlich noch eine Reibbelagwarneinrichtung bekannt, bei der eine Leiterschleife um zwei im Abstand zueinander angeordnete zylindrische Einlegekörper geschlungen ist. Die Einlegekörper müssen bei der Fertigung der Reibbelagwarneinrichtung in ein vorgefertigtes Gehäuse eingelegt und mit der Leiterschleife versehen werden. Anschließend wird das Gehäuse mit einem feuchtigkeits- und temperaturbeständigen Material aufgefüllt. Diese Herstellungsweise ist relativ aufwendig und die Anordnung zweier Einlegekörper relativ kompliziert.

Der Erfindung liegt die Aufgabe zugrunde, ein einfaches Verfahren zur Herstellung einer Reibbelagwarneinrichtung anzugeben, bei der die Warnpunkte in akzeptablen Toleranzbereichen liegen.

Diese Aufgabe wird gemäß den Merkmalen des Anspruchs 1 gelöst. Die Anzeigegenauigkeit ist direkt von der Lage des elektrischen Leiters in der durch die Ummantelung umgrenzten Warnpille abhängig. Anzeigetoleranzen werden somit durch Umspritzen des Warnleiters und der Verwendung eines Einlegeteiles minimiert. Die Anzeigetoleranz ist somit direkt von der Toleranz des Einlegeteiles abhängig. Durch die Fertigung in zwei Stufen, das heißt unter Verwendung eines Einlegeteiles bei der Umspritzung werden die Toleranzen minimiert. Dadurch wird es möglich, auch enge Meßstufen bei einer mehrstufigen Anzeige zu realisieren. In einfacher Weise sind das Einlegeteil und das ummantelnde Teil gespritzt und als Spritzgußteile hergestellt. Mit Hilfe eines Fixpunktes läßt sich das Einlegeteil mit dem Kabel innerhalb einer Spritzgießform so festlegen, daß beide Teile einen genau definierten Abstand zu den Außenwänden einer gesamten Warnpille aufweisen. Dabei sind die Fixpunkte als durchgehende Öffnungen in dem Einlegeteil vorhanden, so daß durch einfaches Einfügen eines Stiftes durch die durchgehenden Öffnungen und die Gußform das Einlegeteil und das Kabel in einer Spritzform festgelegt sind.

Für eine verbesserte Anzeige mit mehreren Warnpunkten sind zwei elektrische Leiter in Schlaufen verschiedener Erstreckung in axialer Bremsrichtung um das Einlegeteil gelegt, so daß vorteilhaft mehrere Anzeigepunkte für die Reibbelagabnutzung vorgesehen sind.

In diesem Fall ist die Reibbelagwarneinrichtung über mindestens dreipolige Stecker mit einer fahrzeugseitigen elektrischen Schaltung verbunden.

In einer vorteilhaften Ausführungsform ist jeder elektrische Leiter mit einem Widerstand versehen, so daß mit Hilfe einer elektrischen Schaltung überprüft werden kann, ob die gesamte Warneinrichtung ausgefallen ist, ob nur der Reibbelag bis zum ersten Warnpunkt abgenutzt ist oder ob der Reibbelag bereits eine kritische Grenze überschritten hat, so daß ein Bremsbackenwechsel nötig wird. In einfacher Weise sind die beiden Widerstände in einem reibbelagseitigen Stecker angeordnet, so daß die Steckerleisten aus reibbelagseitigem Stecker und fahrzeugseitigem Stecker nur zweipolig ausführbar ist.

Wenn die Widerstände in einem fahrzeugseitigen Stecker angeordnet sind, brauchen die Widerstände bei einem Reibbelagwechsel nicht ausgetauscht zu werden und sind wieder verwertbar, falls die Pille fest mit dem Bremsklotz, z.B. durch Vergießen, verbunden sein soll.

Wenn die Kabelstränge eines ummantelten Warnleiters an der Stelle, wo sie aus der Warnpille herausgeführt sind, unmittelbar nebeneinander liegen, kann die Ummantelung der Kabelstränge aufgrund der beim Bremsen auftretenden, unter Umständen sehr hohen Temperaturen schmelzen und zwischen den Leitern der Kabelstränge ein Kurzschluß entstehen. Ein solcher Kurzschluß wird durch die damit verbundene elektrische Schaltung nicht als Fehler erkannt. Die Warnanzeige meldet in diesem Fall "Bremsbelag in Ordnung", auch wenn die Warnschleife aufgrund fortgeschrittenen Belagverschleißes durchtrennt wurde.

Dieser Nachteil wird bei einer Anordnung gemäß Anspruch 8 vermieden. Weitere vorteilhafte Ausgestaltungsformen sind in den Ansprüchen 9 bis 12 beschrieben. Ein modifiziertes Herstellungsverfahren wird in Anspruch 13 offenbart.

Mit den Ansprüchen 14 bis 17 soll auch eine Bremsbacke geschützt werden, die aufgrund der dort genannten Merkmale besonders dafür geeignet ist, mit einer Warneinrichtung gemäß den Verfahrensansprüchen 1 bis 13 eine funktionelle Einheit zu bilden.

Nachfolgend sind Ausführungsbeispiele der Erfindung anhand von Zeichungen näher erläutert.

Es zeigen:
- Fig. 1: eine Reibbelagwarneinrichtung mit einem Stecker in Draufsicht,
- Fig. 2: dieselbe Reibbelagwarneinrichtung, teilweise geschnitten, in Seitenansicht,
- Fig. 3: eine Verbindung für einen elektrischen Leiter innerhalb des Steckers,
- Fig. 4: ein Einlegeteil in Seitenansicht,
- Fig. 5: das Einlegeteil in Schnittdarstellung,
- Fig. 6: das Einlegeteil in Schnittdarstellung entlang der Linie VI-VI gemäß Fig. 5,
- Fig. 7: die Reibbelagwarneinrichtung in einer ersten teilweise geschnittenen Seitenansicht,
- Fig. 8: die Reibbelagwarneinrichtung in einer zweiten Seitenansicht,
- Fig. 9: die Reibbelagwarneinrichtung in Schnittdarstellung entlang der Linie IX-IX gemäß Fig. 7,
- Fig. 10: die Reibbelagwarneinrichtung, teilweise geschnitten, in Draufsicht,
- Fig. 11: eine zweite zweistufige Reibbelagwarneinrichtung mit einem Stecker,
- Fig. 12: die Reibbelagwarneinrichtung in teilweise geschnittener Seitenansicht,
- Fig. 13: ein Einlegeteil für die zweistufige Reibbelagwarneinrichtung,
- Fig. 14: dasselbe Einlegeteil teilweise geschnitten in Seitenansicht,
- Fig. 15: die Reibbelagwarneinrichtung in einer ersten Seitenansicht,
- Fig. 16: die Reibbelagwarneinrichtung in einer zweiten Seitenansicht,
- Fig. 17: die Reibbelagwarneinrichtung in Schnittdarstellung entlang der Linie XVII-XVII gemäß Fig. 15,
- Fig. 18: die Reibbelagwarneinrichtung, teilweise geschnitten, in Draufsicht,
- Fig. 19: die Reibbelagwarneinrichtung an einem Bremsbacken,
- Fig. 20: ein Schaltbild,
- Fig. 21: eine Reibbelagwarneinrichtung mit einem modifizierten Einlegeteil als Abstandhalter,
- Fig. 22: eine Reibbelagwarneinrichtung mit einem Führungsteil als Abstandhalter,
- Fig. 23: einen Schnitt entlang der Linie A-A aus Fig. 22,
- Fig. 24: eine Reibbelagwarneinrichtung mit einem einteiligen Formteil als Abstandhalter,
- Fig. 25: einen Schnitt entlang der Linie B-B aus Fig. 24,
- Fig. 26: eine Reibbelagwarneinrichtung mit einem zweiteiligen Formkörper als Abstandhalter,
- Fig. 27: einen Schnitt entlang der Linie C-C aus Fig. 26 vor der Fixierung des Formkörpers,
- Fig. 28: wie Figur 27 aber nach der Fixierung des Formkörpers.

In den Figuren sind gleiche bzw. einander entsprechende Bauteile der Übersichtlichkeit wegen mit gleichen Bezugszeichen versehen.

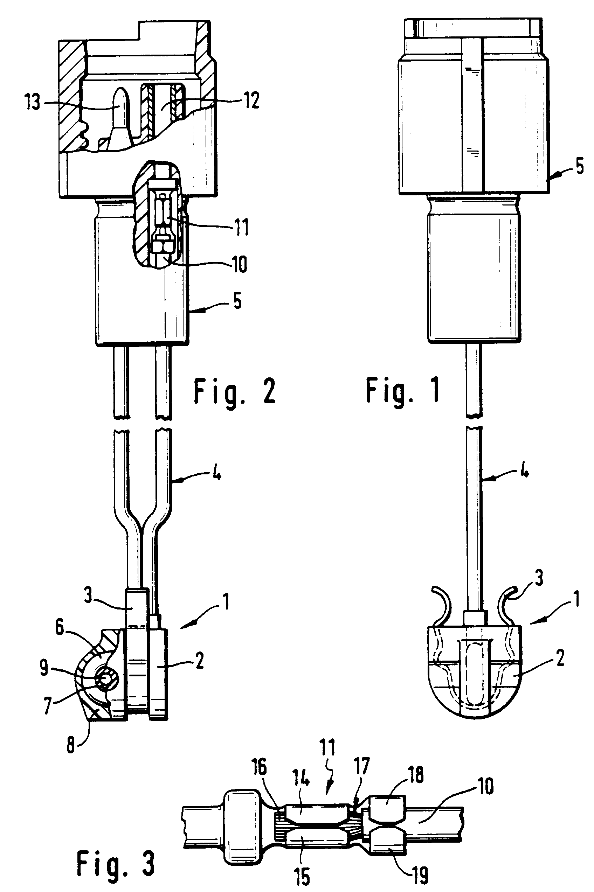

Fig. 1, 2 und 3 zeigen eine Reibbelagwarneinrichtung 1 mit einer Warnpille (Isolierstück) 2, mit einer Feder 3, einem Kabel 4 und einem Stecker 5. Das Kabel 4 ist innerhalb der Warnpille 2 in Schlaufenform verlegt und umgreift mit seiner Schlaufe 6 ein Einlegeteil 7, das innerhalb eines Spritzgußteiles 8 angeordnet ist. Zur Justierung des Einlegeteiles 7 in in der Gußform für das Spritzgußteil 8 ist eine durchgehende Öffnung 9 innerhalb des Einlegeteiles 7 vorgesehen. Die beiden Kabelenden 10 des Kabels 4 enden in dem Stecker 5 und sind mit Hilfe eines Krimpanschlusses 11 an einem weiblichen Stecker 12 und einem männlichen Stecker 13 innerhalb des weiblichen Steckers 5 festgelegt. Der Krimpanschluß 11 legt mit Hilfe seiner gekrümmten Seitenlaschen 14,15 die Kupferlitze 16 des elektrischen Leiters 17 und mit Seitenlaschen 18,19 das Kabelende 10 innnerhalb des Steckers 5 fest.

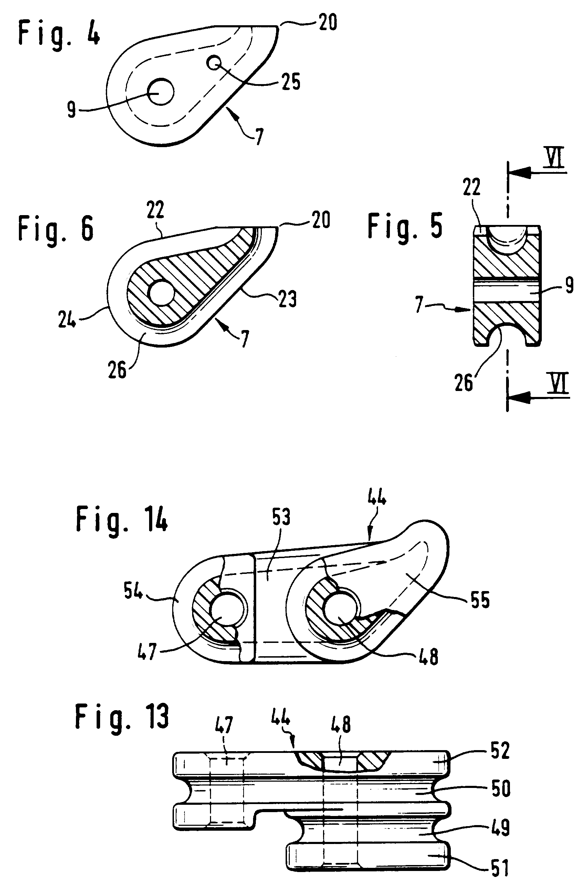

Fig. 4, 5 und 6 zeigen das Einlegeteil 7, das als Spritzgußteil hergestellt ist. Das Einlegeteil ist tropfenförmig mit einer Spitze 20, zwei an der Spitze 20 zusammenstoßenden Seitenflächen 22,23 und einer die Seitenflächen 22,23 verbindenden Bogenfläche 24 ausgebildet. Das Einlegeteil 7 weist eine gerundete Nut 26 auf, in der ein Kabel führbar ist. Die umlaufende Nut 26 ist so ausgeführt, daß das Kabel 4 nur an der Seitenfläche 22 aus dem Spritzgußteil heraustritt, also Nutenden von der Seitenfläche 22 begrenzt sind. Des weiteren weist das Einlegeteil zentrisch zu der Rundung 24 eine durchgehende Öffnung 9 in Form einer Bohrung auf und ist in Richtung auf die Spitze 20 etwa mittig zwischen der Bohrung 9 und der Spitze 20 eine Ausnehmung 25 angeordnet. Die Bohrung 9 und die Ausnehmung 25 dienen dazu, das Einlegeteil mit dem Kabel innerhalb einer Spritzgießform, bei der die gesamte Warnpille hergestellt wird, zu fixieren.

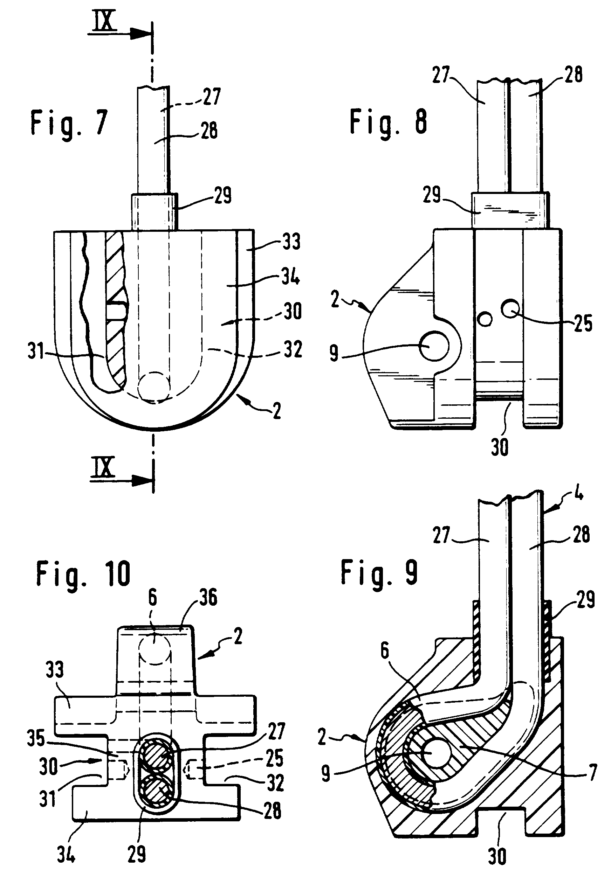

Fig. 7,8,9 und 10 zeigen die gesamte Pille 2 mit der Kabelschlaufe 6 des Kabels 4, die in der Nut 26 des Einlegeteiles 7 geführt ist. Von der Kabelschlaufe 6 gehen zwei Kabelstränge 27,28 aus, die von einem Schrumpfschlauch 29 ummantelt und parallel zueinander gehalten sind. Mit Hilfe dieses Schraumpfschlauches wird die Kabelschlaufe in der Nut 26 des Einlegeteiles 7 so gehalten, daß Einlegeteil 7 und Kabel 4 unverlierbar aneinander gehalten sind. Nach Festlegen des Einlegeteiles 7 in der Kabelschlaufe 6 mit Hilfe des Schrumpfschlauches 29 werden die letztgenannten drei Teile von demselben Material umspritzt, aus dem bereits das Einlegeteil hergestellt ist. Dabei entsteht das Spritzgußteil 8, so daß sich aus Schrumpfschlauch 29, Kabelschlaufe 6, Teile der Kabelstränge 27,28 und des Einlegeteiles 7 insgesamt die Warnpille 2 ergibt. Um die Warnpille 2 verläuft eine U-förmige Nut 30, deren beiden Schenkel 31,32 parallel zu den Kabelsträngen 27,28 ausgerichtet sind. Die Nut dient zur Aufnahme der Feder 3. Die Warnpille 2 ist in Draufsicht (Fig. 10) H-förmig mit zwei Seitenstreben 33,34 und einem mittleren Schenkel 35 aufgebaut. Die beiden Schenkel 33,34 begrenzen die umlaufende Nut 30. Der mittlere Schenkel 35 des H's weist eine Verlängerung 36 über die Seitenstrebe 33 hinaus auf, in die die Schlaufe 6 hineinragt.

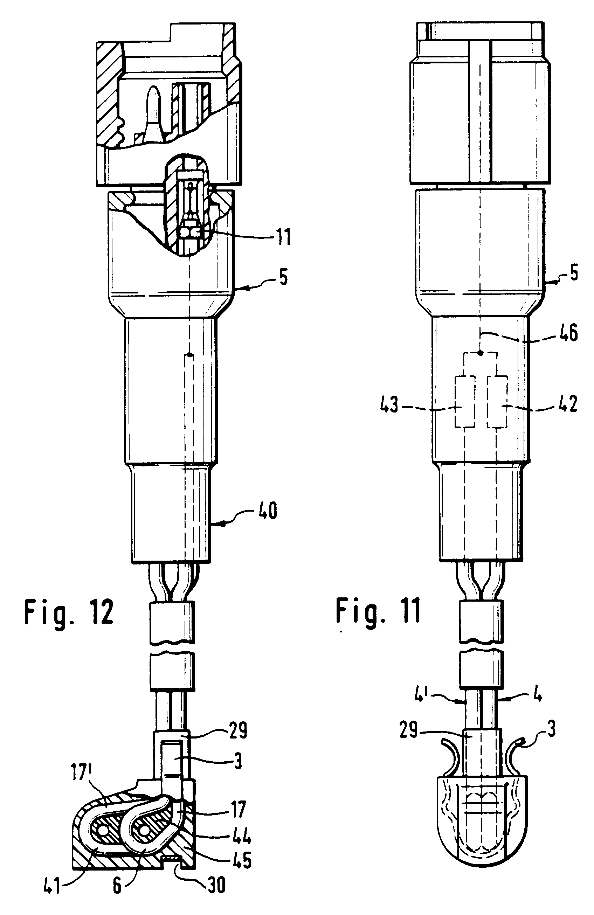

Fig. 11,12 zeigen eine zweistufige Reibbelagwarneinrichtung 40 mit zwei Kabelschlaufen 6 und 41. In dem Stecker 5 sind für jede Schlaufe 6,41 ein elektrischer Widerstand 42,43 angeordnet. Die Widerstände 42,43 sind durch den Stecker 5 abdichtend geschützt. Die Kabelschlaufen 6,41 sind um ein Einlegeteil 44 gelegt und von einem Spritzgußteil 45 ummantelt. Auch der Stecker 5 ist zweipolig ausgelegt, da beide Kabelschlaufen denselben Masseanschluß haben, d.h. beide Ausgangskabel miteinander verschaltet sind, und die beiden Widerstände auf der den Schlaufen 6,41 abgewandten Seite zu einer Leitung 46 kurzgeschlossen sind.

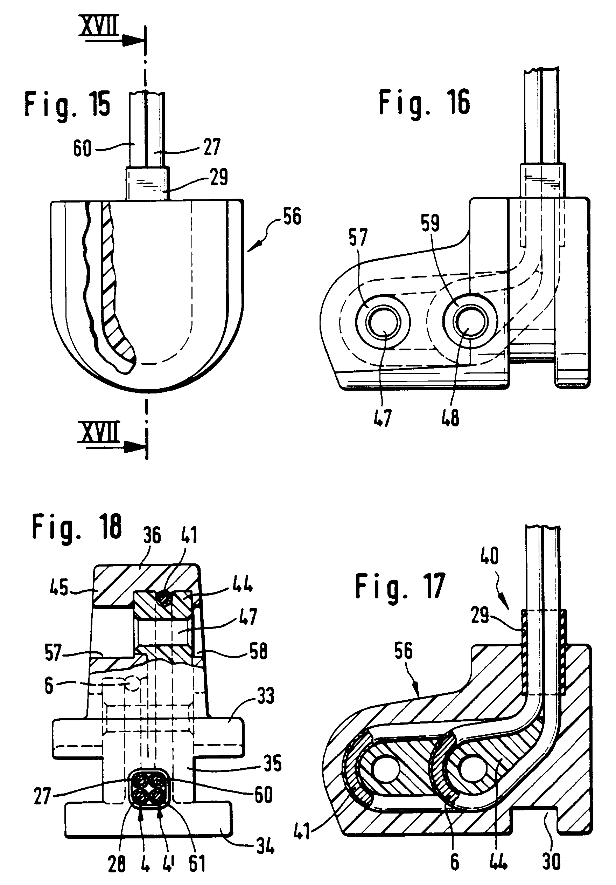

Fig. 13,14 zeigen das Einlegeteil 44 mit zwei durchgehenden Öffnungen 47,48 in Form von Bohrungen, mit denen das Einlegeteil 44 in einer Form festlegbar ist. Das Einlegeteil 44 weist zwei parallel geführte, über den Umfang verlaufende Nuten 49,50 auf, in denen die beiden Kabelschlaufen 6,41 geführt sind. Das Einlegeteil 44 weist zwei Bereiche 51 und 52 für jeweils eine Kabelschlaufe 6 und 41 auf. Der Bereich 51 ist ähnlich dem Einlegeteil 7 ausgeführt. In Seitenansicht weist das Einlegeteil eine Rechteckform 53 mit einem halbkreisförmigen Ansatz 54 und einem dreieckförmigen Ansatz 55 an den beiden Schmalseiten des Rechtecks auf. Über den Ansatz 54 verläuft die Kabelschlaufe 41.

Fig. 15,16,17 und 18 zeigen die Reibbelagwarneinrichtung 40 mit der Pille 56, die als zweistufige Reibbelagwarneinrichtung 40 ausgelegt ist. Dazu sind zwei Kabelschlaufen 6,41 um das Einlegeteil 44 gelegt. Der mittlere Schenkel 35 der in Draufsicht H-förmigen Pille 2 ist mit der Verlängerung 36 versehen, in die das Einlegeteil 44 und die beiden Kabelschlaufen 6 und 41 hineinragen. In dem Einlegeteil 44 der Warnpille 56 sind die beiden Bohrungen 47,48 angeordnet, an denen sich in dem Spritzgußteil 45 Ausnehmungen 57,58 und 59 anschließen. Somit ergibt sich für die Pille 56 eine gestufte Bohrung aus der Bohrung 47 und den beiden Ausnehmungen 57,58. Damit kann das Einlegeteil 44 in einer Spritzgießform, in der das Einlegeteil 44 mit dem Spritzgußteil 45 ummantelt wird, mit zwei gestuften Bolzen dreidimensional fixiert bzw. festgelegt werden. Der Schrumpfschlauch 29 legt die Kabelschlaufen 6,41 an das Einlegeteil 44 fest an und sorgt andererseits dafür, daß bei der Ummantelung mit dem Spritzgußteil 45 die Spritzgußform an der Stelle der austretenden Kabel abgedichtet wird. Der Schrumfschlauch 29 ummantelt insgesamt vier Kabelstränge 27,28,60,61 zweier Kabel 4 und 4'.

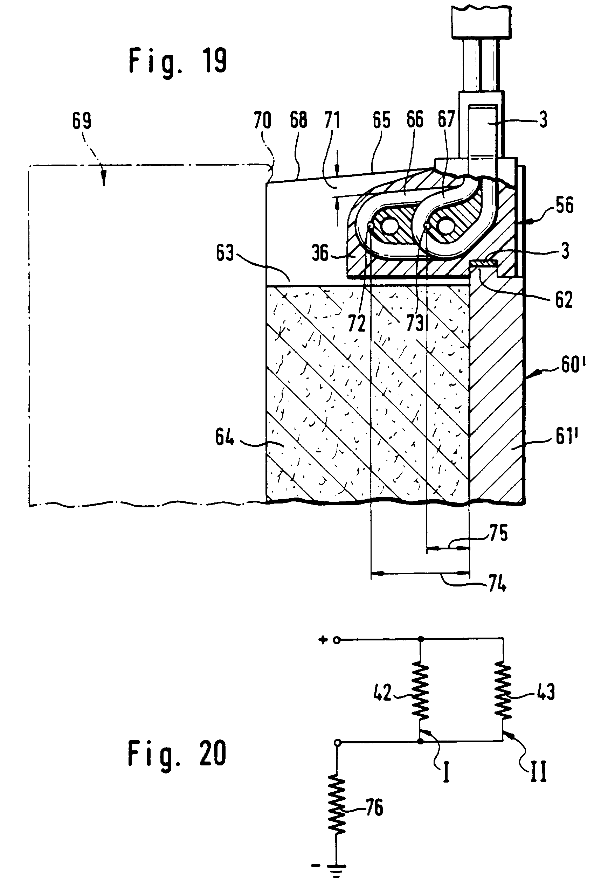

Fig. 19 zeigt die zweistufige Reibbelagwarnpille 56 an einer Bremsbacke 60'. Eine Belagträgerplatte 61' der Bremsbacke 60' weist einen Vorsprung 62 auf, der in die umlaufende Nut 30 der Reibbelagwarneinrichtung 40 eingreift und damit die Pille 56 an der Bremsbacke 60' axial festlegt. Zwischen der Pille 56 und dem Vorsprung 62 verläuft die Feder 3. Die Verlängerung 36 der H-förmigen Pille 56 ragt in eine Ausnehmung 63 des Reibbelages 64 der Bremsbacke 60'. Dabei sind die obere Kante 65 der Pille 56 und insbesondere die oberen Schlaufenteile 66,67 unterhalb der Umfangsfläche 68 des Reibbelages 64 angeordnet. An der Bremsscheibe 69 entsteht oberhalb der Fläche 68 ein Grat 70, der sich bei Bremsbelagverschleiß in Richtung der Pille 56 bewegt. Durch einen radialen Abstand 71 zwischen den Schlaufenteilen 66,67 und der Oberkante 68 ist sichergestellt, daß der Grat 70 die Schlaufen 6,41 nicht vorzeitig durchtrennt. Bewegen sich Bremsbacke 60' und Bremsscheibe 69 aufeinander zu, so wird bei Durchtrennen der Kabelschlaufen 41 und bei Erreichen des Punktes 72 zunächst bei einer Reibbelagdicke 74 und bei Erreichen des Punktes 73 bei einer Reibbelagdicke 75 gewarnt. Mit zunehmendem Belagverschleiß wandert der Belagträger 61' näher an die Bremsscheibe 69 heran, bis die Warnpille 56 zunächst angeschliffen, anschließend die erste Warnschleife in Form der Schlaufe 41 und danach die zweite Warnschleife in Form der Schlaufe 6 durchtrennt werden. Die Warnschleifen sind zweckmäßig so ausgelegt, daß der sich bildende Scheibengrat 70 nicht zu einer vorzeitigen Anzeige führen kann. Die Anzeigegenauigkeit ist direkt von der Lage des Warndrahtes 17,17' in der Warnpille 56 abhängig. Diese wird durch Umspritzen des Warnleiters unter Verwendung eines Einlegeteiles 7 minimiert. Der Fertigungsablauf der Pille ist folgender: Erst wird das Einlegeteil gespritzt, dann das Kabel eingelegt und danach umspritzt. Die Anzeigetoleranz ist somit direkt von der Toleranz des Einlegeteiles 7 abhängig. Außerdem wird somit ermöglicht, den Warndraht 17,17' in der aufgeführten Schleifenform zu verlegen.

Die durchtrennten Warnleiter 17,17' können auf verschiedene Weise für eine Anzeige benutzt werden. Erstens kann die Scheibe bei Berührung mit der Litze einen Massekontakt ergeben, das ergibt zwei verschiedene Warnkreise. Als zweite Möglichkeit ergibt ein Durchtrennen der Warnleiter eine Unterbrechung der Stromkreise, so daß kein Durchfluß mehr vorhanden ist.

Eine Schaltung entsprechend Fig. 20 zeigt eine Spannungsänderung an einem Widerstand, die zur Auswertung verwendet wird. Dabei ist ein zweipoliger Stecker der Steckerleiste vorgesehen. Wird die Warnschleife I entsprechend dem Schaltplan mit dem Widerstand 42 und die Schleife II mit dem Widerstand 43 verbunden, so kann die Spannung an einem Widerstand 76 zur Messung verwendet werden, so daß beim Durchtrennen der Warnschleifen der Spannungsabfall erfaßt werden kann. Die zur Messung notwendigen Spannungswerte lassen sich durch die Größe der Widerstände im Rahmen der Spannungsversorgung beliebig variieren.

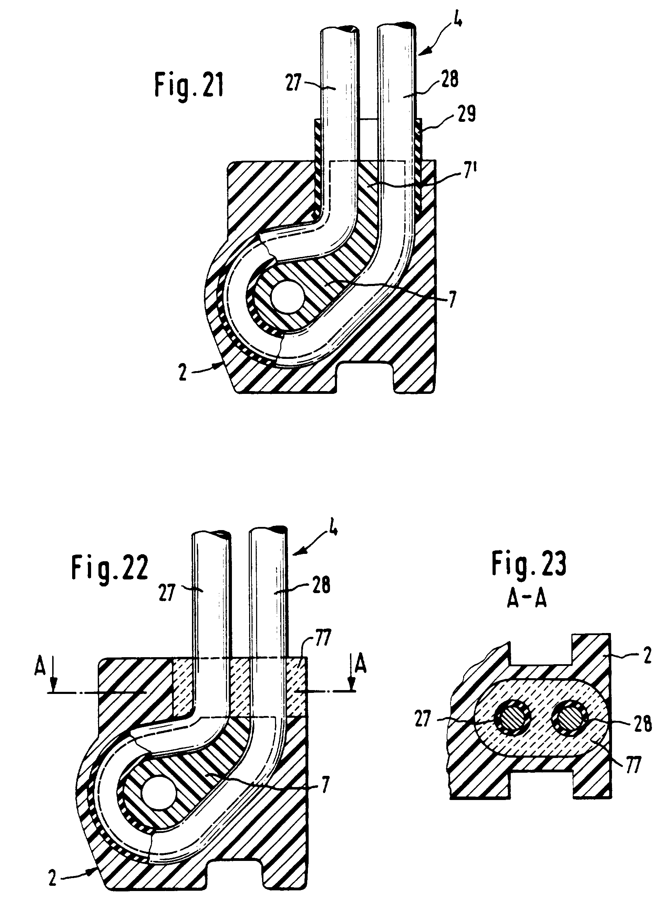

Figur 21 zeigt eine Warnpille 2 mit einem modifizierten Einlegeteil 7, dessen Fortsatz 7' in den Bereich zwischen den beiden Kabelsträngen 27,28 des Warnkabels 4 hineinreicht und die Kabelstränge 27,28 auf Abstand zueinander hält. Bei der Herstellung der Warnpille 2 wird das Kabel 4 in Form einer Schlaufe um das Einlegeteil 7 geschlungen und mittels einer übergeschobenen Hülse oder eines Schrumpfschlauchs 29 fixiert. Die so vormontierte Einheit wird dann mit Kunststoff umspritzt.

Bei dem in den Figuren 22 und 23 dargestellten Ausführungsbeispiel wird als Abstandhalter ein längliches Führungsteil 77 aus Kunststoff verwendet, das zwei Löcher zum Durchgang der Kabelstränge 27,28 aufweist. Das Führungsteil 77 wird auf die beiden Kabelstränge 27,28 aufgeschoben und dient dabei gleichzeitig zur Fixierung der aus Einlegeteil 7, Kabel 4 und Führungsteil 77 bestehenden Einheit, die anschließend mit Kunststoff umspritzt wird.

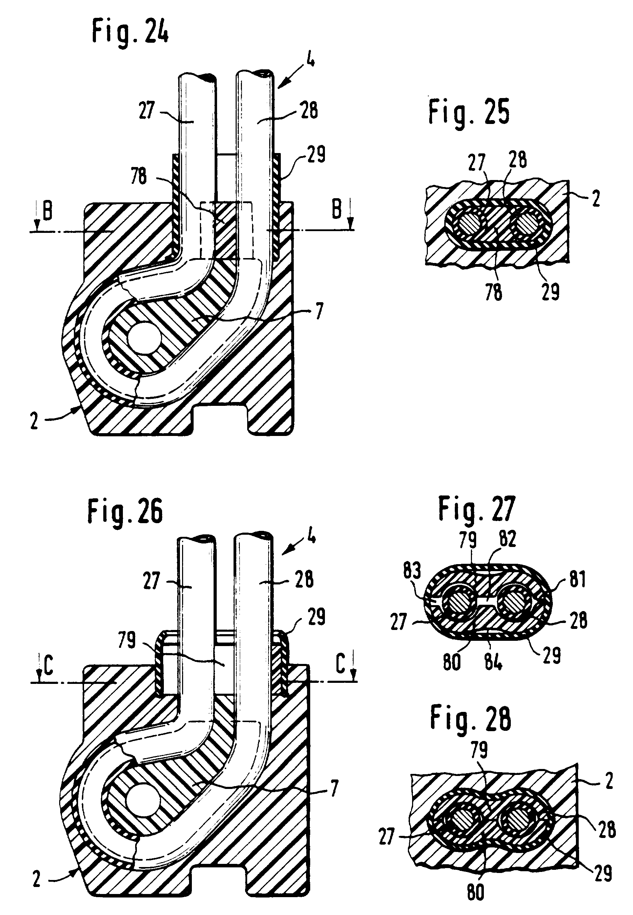

Die Figuren 24 und 25 zeigen ein Ausführungsbeispiel, bei dem ein Formteil 78 aus Kunststoff als Abstandhalter zwischen die Kabelstränge 27,28 eingeklemmt wird und diese wiederum mittels eines aufgeschobenen Schrumpfschlauchs 29 oder einer Hülse an das Formteil 78 angedrückt werden. Bei Verwendung einer festen, aber elastischen Hülse braucht die nicht unbedingt ganz geschlossen zu sein. Es genügt, wenn sie die Kabelstränge 27,28 zumindest teilweise umschließt und an das Formteil 78 andrückt.

Ein letztes Ausführungsbeispiel ist in den Figuren 26 bis 28 dargestellt. Als Abstandhalter wird hier ein Formkörper aus Kunststoff verwendet, dessen zwei Teile 79,80 zunächst an der Sollbruchstelle 81 zusammenhängend hergestellt werden, so daß sie eine an den Stellen 82 und 83 durchbrochene "8" mit einer Taille 84 bilden. Die zusammenhängenden Teile 79,80 werden dann in eine ovale Metallhülse 29 gesteckt und die so vormontierte Einheit auf die Kabelstränge 27,28 aufgeschoben. Nach dem Straffen der Kabelstränge 27,28 wird die Metallhülse 29 auf Höhe der Taille 84 zusammengedrückt, wobei die Sollbruchstelle 81 nachgibt, die beiden Teile 79,80 des Formkörpers in Anlage miteinander kommen und die Kabelstränge 27,28 fest zwischen sich einklemmen. Da die Hülse 29 an der Taille 84 dauerhaft verformt wird, bleibt die Klemmung erhalten und sorgt, wie auch in den vorangehenden Beispielen, für eine Fixierung der aus Kabel 4, Einlegeteil 7, Formkörper 79,80 und Hülse 29 bestehenden Einheit, die daher anschließend problemlos umspritzt werden kann.

## Patentansprüche

1. Verfahren zur Herstellung einer Reibbelagwarneinrichtung (1), mit folgenden Verfahrensschritten:
- ein Einlegeteil (7) wird durch Spritzguß hergestellt, wobei eine durchgehende Öffnung (9,25) zur Fixierung des Einlegeteils (7) eingeformt wird;
- danach wird ein mit einem elektrischen Leiter (17) versehenes Kabel (4) in Schlaufenform (6,41) um das Einlegeteil (7) gelegt und das Einlegeteil (7) in einer Spritzgießform mit seiner Öffnung (9,25) auf einem Stift fixiert;
- dann wird die Einheit aus Einlegeteil (7) und Kabel (4) umspritzt, so daß eine Pille (2) als Einheit aus dem Einlegeteil (7), dem Kabel (4) und der Ummantelung (8) entsteht, aus der die von der Schlaufe (6,41) ausgehenden Kabelstränge ( 27,28) herausgeführt sind.

2. Verfahren nach Anspruch 1, **dadurch gekennzeichnet,** daß ein Schrumpfschlauch (29) um zwei Kabelenden (10,27,28) gelegt ist, so daß das Einlegeteil (7) in der Kabelschlaufe (6,41) gehalten ist.

3. Verfahren nach Anspruch 1 oder 2, **dadurch gekennzeichnet,** daß um das Einlegeteil (7) zwei Kabelschlaufen (6,41) verschiedener Größe gelegt sind.

4. Verfahren nach Anspruch 3, **dadurch gekennzeichnet,** daß jeder elektrische Leiter (17,17') eines Kabels (4,4') an einen Widerstand (42,43) angeschlossen ist.

5. Verfahren nach Anspruch 4, **dadurch gekennzeichnet,** daß beide Widerstände (42,43) in einem reibbelagseitigen Stecker einer Steckerleiste (5) angeordnet sind.

6. Verfahren nach Anspruch 4, **dadurch gekennzeichnet,** daß beide Widerstände (42,43) in einem fahrzeugseitigen Stecker einer Steckerleiste (5) angeordnet sind.

7. Verfahren nach einem der Ansprüche 1 bis 6, **dadurch gekennzeichnet,** daß die Schlaufe (6,41) unterhalb der Reibbelagkante (68) des Reibbelages (64) angeordnet ist.

8. Verfahren nach einem der Ansprüche 1 bis 7, **dadurch gekennzeichnet,** daß die Kabelstränge (27,28) im Inneren der Warnpille (2) und an der Stelle, wo sie herausgeführt sind, mit Abstand zueinander angeordnet sind.

9. Verfahren nach Anspruch 8, **dadurch gekennzeichnet,** daß sich das im Inneren der Schlaufe angeordnete, elektrisch nicht leitende Einlegeteil (7) auch in den Bereich zwischen benachbarten Kabelsträngen (27,28) und ungefähr bis zum äußeren Rand der Warnpille (2) erstreckt und daß die Kabelstränge (27,28) mittels einer sie umschließenden Hülse oder eines Schrumpfschlauchs (29) an das Einlegeteil (7) angedrückt werden.

10. Verfahren nach Anspruch 8, **dadurch gekennzeichnet,** daß die Warnpille (2) ein an ihrem äußeren Rand angeordnetes Führungsteil (77) aus einem elektrisch nicht leitenden Material aufweist, das mit im Abstand zueinander angeordneten und zum Durchgang der Kabelstränge (27,28) bestimmten Durchbrüchen oder Löchern versehen ist.

11. Verfahren nach Anspruch 8, **dadurch gekennzeichnet,** daß im Bereich des äußeren Randes der Warnpille (2) zwischen den Kabelsträngen (27,28) ein Formteil (78) aus einem elektrisch nicht leitenden Material eingeklemmt ist, das benachbarte Kabelstränge (27,28) auf Abstand hält, und daß die Kabelstränge (27,28) mittels einer sie umschließenden Hülse oder eines Schrumpfschlauchs (29) an das Formteil (78) angedrückt werden.

12. Verfahren nach Anspruch 8, **dadurch gekennzeichnet,** daß im Bereich des äußeren Randes der Warnpille (2) ein zweiteiliger Formkörper (79,80) angeordnet ist, der in Form einer "8" zwei Kabelstränge (27,28) umschließt und diese im Abstand zueinander festklemmt, wobei der Formkörper (79,80) in einer durch beide Kabelstränge (27,28) verlaufenden Ebene geteilt ist und die beiden Teile (79,80) mittels einer sie umschließenden Hülse (29) zusammengepreßt werden.

13. Verfahren nach einem der Ansprüche 8 bis 12, **gekennzeichnet,** durch folgende Verfahrensschritte:
- Ein Einlegeteil (7) und ein Abstandhalter (78,79,80) werden hergestellt,
- das Einlegeteil (7) wird mit mindestens einem elektrischen Kabel (4) versehen, die Kabelstränge (27,28) des Kabels (4) werden mit dem Abstandhalter (7',78,79,80) versehen und die genannten Teile vorzugsweise durch eine die Kabelstränge (27,28) umschließende Hülse oder einen Schrumpfschlauch (29) zu einer Einheit verbunden,
- schließlich wird die Einheit aus Einlegeteil (7), Kabel (4), Abstandhalter (7',78,79,80) und Befestigungsmittel (29) ummantelt.

14. Bremsbacke (60) mit einer Trägerplatte (61) und einem Reibbelag (64) und mit einer Reibbelagwarneinrichtung (1), hergestellt durch ein Verfahren nach einem der Ansprüche 1 bis 13, mit einem durch Spritzguß hergestelltem Einlegeteil (7), wobei eine durchgehende Öffnung (9,25) zur Fixierung des Einlegeteils (7) eingeformt ist, ein mit einem elektrischen Leiter (17) versehenes Kabel (4) in Schlaufenform (6, 41) um das Einlegeteil (7) gelegt ist, und die Einheit aus Einlegeteil (7) und Kabel (4) umspritzt ist, so daß eine Pille (2) eine Einheit aus dem Einlegeteil (7), dem Kabel (4) und der Ummantelung (8) bildet, aus der die von der Schlaufe (6,41) ausgehenden Kabelstränge (27,28) herausgeführt sind, **dadurch gekennzeichnet,** daß die Trägerplatte (61) einen Vorsprung (62) zur axialen Sicherung einer Reibbelagwarneinrichtung (1) aufweist.

15. Bremsbacke nach Anspruch 14, **dadurch gekennzeichnet,** daß eine Ausnehmung (63) innerhalb des Reibbelages (64) so bemessen ist, daß die Reibbelagwarneinrichtung (1) radial in der Ausnehmung (63) versinkt.

16. Bremsbacke nach Anspruch 14 oder 15, **dadurch gekennzeichnet,** daß die Schlaufe(n) in einer zur Bremsbacke senkrechten Ebene aufgespannt ist (sind).

17. Bremsbacke mit einer Reibbelagwarneinrichtung nach einem der Ansprüche 14 bis 16, **dadurch gekennzeichnet,** daß die belagseitigen Schlaufenenden sich im Abstand zueinander befinden.

## Claims

1. A process for the manufacture of a friction lining warning device (1) including the following process steps:
- an inserted element (7) is manufactured by injection moulding, and a through opening (9, 25) is formed for the fixation of the inserted element (7);
- thereupon a cable (4) provided with an electric conductor (17) is routed in the shape of a loop (6, 41) around the inserted element (7), and the inserted element (7) is fixed with its opening (9, 25) on a pin in an injection mould;
- then the unit composed of the inserted element (7) and the cable (4) is enveloped by injection moulding, so that a pill (2) is formed as an assembly unit of the inserted element (7), the cable (4) and the sheathing (8), from which the cable strands (27, 28) emanating from the loop (6, 41) extend outwardly.

2. A process as claimed in claim 1,
**characterized** in that a shrink hose (29) is positioned around two cable ends (10, 27, 28) so that the inserted element (7) is retained in the cable loop (6, 41).

3. A process as claimed in claim 1 or 2,
**characterized** in that two cable loops (6, 41) of different size are wound around the inserted element (7).

4. A process as claimed in claim 3,
**characterized** in that each electric conductor (17, 17') of a cable (4, 4') is connected to a resistor (42, 43).

5. A process as claimed in claim 4,
**characterized** in that both resistors (42, 43) are positioned in a friction lining-side plug (5) of a plug unit (5).

6. A process as claimed in claim 4,
**characterized** in that both resistors (42, 43) are positioned in a vehicle-side plug of a plug unit (5).

7. A process as claimed in anyone of claims 1 to 6,
**characterized** in that the loop (6, 41) is positioned beneath the friction lining edge (68) of the friction lining (64).

8. A process as claimed in anyone of claims 1 to 7,
**characterized** in that the cable strands (27, 28) are spaced from each other in the interior of the warning pill (2) and at the location where they leave it.

9. A process as claimed in claim 8,
**characterized** in that the electrically non-conducting inserted element (7) arranged in the interior of the loop also extends into the range between adjacent cable strands (27, 28) and approximately up to the external edge of the warning pill (2), and in that the cable strands (27, 28) are urged against the inserted element (7) by means of a bush clasping them or by means of a shrink hose (29).

10. A process as claimed in claim 8,
**characterized** in that the warning pill (2) includes at its external edge a guide element (77) made of an electrically non-conducting material which has apertures or holes spaced from one another through which the cable strands (27, 28) extend.

11. A process as claimed in claim 8,
**characterized** in that, in the range of the external edge of the warning pill (2), a moulded element (78) made of an electrically non-conducting material is clamped in between the cable strands (27, 28) and keeps adjacent cable strands (27, 28) at a distance from each other, and in that the cable strands (27, 28) are urged against the moulded element (78) by means of an enclosing bush or a shrink hose (29).

12. A process as claimed in claim 8,
**characterized** in that in the range of the external edge of the warning pill (2) a two-part moulded member (79, 80) is positioned which, in the shape of a figure "8", clasps two cable strands (27, 28) and clamps them at a distance from each other, the moulded member (79, 80) being divided in a plane which extends through both cable strands (27, 28) and the two parts (79, 80) being pressed together by means of a bush (29) which clasps them.

13. A process as claimed in any one of claims 8 to 12,
**characterized** by the following process steps:
- an inserted element (7) and a spacing element (78, 79, 80) are manufactured,
- the inserted element (7) has at least one electric cable (4), the cable strands (27, 28) of the cable (4) include the spacing element (7', 78, 79, 80), and the aforementioned parts are coupled to one unit preferably by a bush encompassing the cable strands (27, 28) or by a shrink hose (29),
- finally the unit composed of the inserted element (7), the cable (4), the spacing element (7', 78, 79, 80), and the fixing means (29) is enveloped.

14. A brake shoe (60) including a carrier plate (61) and a friction lining (64) and a friction lining warning device (1), manufactured by a process as claimed in any one of the claims 1 to 13,
including an injection-moulded inserted element (7) having a through opening (9, 25) for the fixation of the inserted element (7), a cable (4) configured as a loop (6, 41) and provided with an electric conductor (17) which is wound around the inserted element (7), wherein the unit composed of the inserted element (7) and the cable (4) is injection coated so that a pill (2) forms a unit composed of the inserted element (7), the cable (4) and the sheathing (8), from which unit the cable strands (27, 28) emanating from the loop (6, 41) extend outwardly,
**characterized** in that the carrier plate (61) has a projection (62) for axially securing a friction lining warning device (1) in position.

15. A brake shoe as claimed in claim 14,
**characterized** in that a recess (63) within the friction lining (64) is so dimensioned that the friction lining warning device (1) sinks radially into the recess (63).

16. A brake shoe as claimed in claim 14 or 15,
**characterized** in that the loop(s) is (are) provided in a plane vertical in relation to the brake shoe.

17. A brake shoe including a friction lining warning device as claimed in any one of the claims 14 to 16,
**characterized** in that the lining-side loop ends are spaced from each other.

## Revendications

1. Procédé de fabrication d'un dispositif d'avertissement d'usure des garnitures de frottement (1), comportant les étapes suivantes:
- réaliser par moulage par injection une pièce d'insertion (7), en y intégrant par moulage une ouverture traversante (9, 25) permettant la fixation de la pièce d'insertion (7);
- ensuite, disposer un câble (4) pourvu d'un conducteur électrique (17) autour de la pièce d'insertion (7), selon une forme de boucle (6, 41), et immobiliser la pièce d'insertion (7) dans un moule d'injection, en emboîtant son ouverture (9, 25) sur un axe;
- puis, surmouler par injection l'ensemble formé par la pièce d'insertion (7) et le câble (4), de manière à produire une pastille (2) constituant un ensemble formé par la pièce d'insertion (7), le câble (4) et l'enveloppe (8), d'où sortent les brins de câble (27, 28) partant de la boucle (6, 41).

2. Procédé selon la revendication 1, caractérisé en ce qu'une gaine thermorétractable (29) est disposée autour des deux extrémités (10, 27, 28) du câble, de manière que la pièce d'insertion (7) soit maintenue dans la boucle (6, 41) du câble.

3. Procédé selon la revendication 1 ou 2, caractérisé en ce que deux boucles de câbles (6, 41) de tailles différentes sont disposées autour de la pièce d'insertion (7).

4. Procédé selon la revendication 3, caractérisé en ce que chacun des conducteurs électriques (17, 17') d'un câble (4, 4') est raccordé sur une résistance (42, 43).

5. Procédé selon la revendication 4, caractérisé en ce que les deux résistances (42, 43) sont disposées dans la prise côté garniture de frottement d'un connecteur (5).

6. Procédé selon la revendication 4, caractérisé en ce que les deux résistances (42, 43) sont disposées dans la prise côté véhicule d'un connecteur (5).

7. Procédé selon l'une des revendications 1 à 6, caractérisé en ce que la boucle (6, 41) est positionnée en dessous du bord (68) de la garniture de frottement (64).

8. Procédé selon l'une des revendications 1 à 7, caractérisé en ce qu'à l'intérieur de la pastille d'avertissement (2), et à l'endroit où ils ressortent de celle-ci, les brins de câble (27, 28) sont disposés à une distance l'un de l'autre.

9. Procédé selon la revendication 8, caractérisé en ce que la pièce d'insertion (7) électriquement non-conductrice, qui est disposée à l'intérieur de la boucle, s'étend aussi dans la zone comprise entre deux brins de câble contigus (27, 28), et à peu près jusqu'au bord extérieur de la pastille d'avertissement (2), et en ce que les brins de câble (27, 28) sont serrés sur la pièce d'insertion (7) au moyen d'une douille ou d'une gaine thermorétractable (29) entourant ces fils.

10. Procédé selon la revendication 8, caractérisé en ce que la pastille d'avertissement (2) comporte, à son bord extérieur, un élément de guidage (77) réalisé en une matière électriquement non-conductrice, cet élément étant pourvu de passages ou trous disposés à une distance l'un de l'autre, qui sont destinés à assurer le passage des brins de câble (27, 28).

11. Procédé selon la revendication 8, caractérisé en ce qu'à proximité du bord extérieur de la pastille d'avertissement (2), une pièce profilée (78) réalisée en une matière électriquement non-conductrice est coincée entre les brins de câble (27, 28), maintenant des brins de câble contigus (27, 28) à l'écart l'un de l'autre, et en ce que les brins de câble (27, 28) sont serrés contre la pièce profilée (78) au moyen d'une douille ou d'une gaine thermorétractable (29) qui les entoure.

12. Procédé selon la revendication 8, caractérisé en ce qu'une pièce profilée en deux parties (79, 80) est disposée à proximité du bord extérieur de la pastille d'avertissement (2), entourant en une forme de "8" deux brins de câble (27, 28), et les bloquant à une distance l'un de l'autre, la pièce profilée (79, 80) étant divisée dans un plan coupant les deux brins de câble (27, 28), et les deux parties étant serrées l'une contre l'autre au moyen d'une douille (29) qui les entoure.

13. Procédé selon l'une des revendications 8 à 12, caractérisé par les étapes suivantes:
- une pièce d'insertion (7) et un élément entretoise (78, 79, 80) sont d'abord réalisés;
- la pièce d'insertion (7) est équipée d'au moins un câble (4) électriquement conducteur, les brins (27, 28) du câble (4) sont équipés de l'élément entretoise (7', 78, 79, 80), et lesdits composants sont de préférence réunis au moyen d'une douille ou d'une gaine thermorétractable (29) entourant les brins de câble (27, 28), de manière à former un ensemble;
- enfin, l'ensemble composé de la pièce d'insertion (7), du câble (4), de l'élément entretoise (7', 78, 79, 80) et du moyen de fixation (29) est enrobé.

14. Plaquette de frein (60) comprenant une plaque porte-garniture (61) et une garniture de frottement (64), ainsi qu'un dispositif (1) d'avertissement d'usure des garnitures réalisé suivant un procédé selon l'une des revendications 1 à 13, comprenant une pièce d'insertion (7) moulée par injection, une ouverture traversante (9, 25) de fixation de la pièce d'insertion (7) y étant intégrée au moulage, un câble (4) pourvu d'un conducteur électrique (17) étant disposé en forme de boucle (6, 41) autour de la pièce d'insertion (7), et l'ensemble constitué de la pièce d'insertion (7) et du câble (4) étant surmoulé par injection, de manière à produire une pastille (2) constituant un ensemble formé par la pièce d'insertion (7), le câble (4) et l'enveloppe (8), d'où sortent les brins de câble (27, 28) partant de la boucle (6, 41), caractérisée en ce que la plaque porte-garniture (61) comporte une saillie (62) prévue pour assurer l'arrêt axial d'un dispositif (1) d'avertissement d'usure des garnitures.

15. Plaquette de frein selon la revendication 14, caractérisée en ce qu'un évidement (63) ménagé dans la garniture de frottement (64) est dimensionné de façon telle que le dispositif (1) d'avertissement soit radialement noyé dans l'évidement (63).

16. Plaquette de frein selon la revendication 14 ou 15, caractérisée en ce que la (les) boucle(s) s'étend(ent) dans un plan perpendiculaire au plan de la plaquette de frein.

17. Plaquette de frein comprenant un dispositif d'avertissement d'usure des garnitures, selon l'une des revendications 14 à 16, caractérisée en ce que les extrémités côté garniture des boucles se situent à une distance l'une de l'autre.
